# EUROPEAN PATENT APPLICATION

(11) **EP 1 619 743 A2**
(43) Date of publication of application: **25.01.2006**
(21) Application number: 05015820.3
(22) Date of filing: 20.07.2005
(51) Int. Cl.: H01M 10/40, H01M 6/16

(54) **Electrolyte for battery**

(30) Priority: 21.07.2004 JP 2004213631; 24.06.2005 JP 2005184993
(71) Applicant: SONY CORPORATION, Tokyo (JP)
(72) Inventor: Adachi, Momoe, Shinagawa-ku Tokyo (JP); Fujita, Shigeru, Shinagawa-ku Tokyo (JP); Kawashima, Atsumichi, Shinagawa-ku Tokyo (JP)
(74) Representative: Müller - Hoffmann & Partner

(57) **Abstract**

A battery capable of inhibiting decrease in capacity and inhibiting swollenness even in hot environment is provided. A battery comprises a cathode (21), an anode (22) and an electrolyte (24) inside a film exterior member. The electrolytic solution contains carboxylate ester or ketone, in which a third alkyl group is directly bonded to a carbonyl group. Thereby, decomposition reaction of the solvent in the cathode is inhibited.

## Description

### CROSS REFERENCES TO RELATED APPLICATIONS

The present invention contains subject matter related to Japanese Patent Application JP 2004-213631 filed in the Japanese Patent Office on July 21, 2004, and Japanese Patent Application JP 2005-184993 filed in the Japanese Patent Office on June 24, 2005, the entire contents of which being incorporated herein by reference.

### BACKGROUND OF THE INVENTION

### 1. Field of the Invention

The present invention relates to a battery including a cathode, an anode, and an electrolyte inside a film exterior member.

### 2. Description of the Related Art

In recent years, many portable electronic devices such as a notebook personal computer, a combination camera (Videotape Recorder), and a mobile phone have been introduced one after another. Downsizing and weight saving of such devices have been made. Along with these situations, as a portable power source, a secondary battery has been spotlighted, and active researches for obtaining a higher energy density have been performed. Under such situation, as a secondary battery having a high energy density, a lithium ion secondary battery has been suggested, and practical application thereof has been started.

In the past, in the lithium ion secondary battery, an electrolytic solution as the liquid electrolyte, in which a lithium salt is dissolved in a nonaqueous solvent has been used as a substance acting ion conduction. Therefore, in order to prevent leak, it has been necessary to use a metal container as an exterior member to strictly secure airtightness inside the battery. However, when the metal container is used as an exterior member, it is very difficult to fabricate a sheet type battery which is thin and has a large area, a card type battery which is thin and has a small area, a battery which is flexible and has a shape with high degree of freedom and the like.

Therefore, instead of the electrolytic solution, a secondary battery using a gelatinous electrolyte in which an electrolytic solution is held in a high molecular weight compound has been suggested (for example, refer to Japanese Unexamined Patent Application Publication No. 2001-283910). In such a battery, there is no problem of leak. Therefore, a laminated film or the like can be used as an exterior member. Consequently, the battery can be further downsized, the weight thereof can be further relieved, and the thickness thereof can be further decreased. Furthermore, degree of freedom of the shape can be improved.

### SUMMARY OF THE INVENTION

However, when the laminated film is used as an exterior member, there has been a disadvantage that when the battery is stored in hot environment, due to decomposition reaction of a solvent in the cathode, the capacity is decreased, and the battery is swollen caused by generation of gas.

In recent years, using a liquid electrolyte for the battery using the laminated film or the like as an exterior member has been considered. In this case, decrease in capacity and swollenness due to generation of gas are significantly shown.

In view of the foregoing, it is desirable to provide a battery capable of inhibiting decrease in capacity and inhibiting swollenness of the battery even if the battery is stored in hot environment.

According to an embodiment of the present invention, there is provided a battery including a cathode, an anode, and an electrolyte inside a film exterior member, in which the electrolyte contains an electrolytic solution containing at least one from the group consisting of carboxylate ester expressed in Chemical formula 1 and ketone expressed in Chemical formula 2.

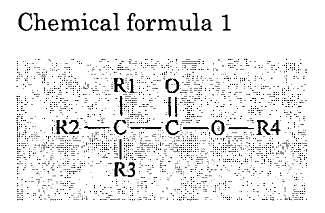

In the formula, R1, R2, R3, and R4 represent an alkyl group with the carbon number from 1 to 4.

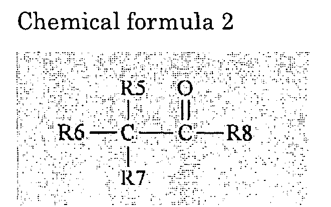

In the formula, R5, R6, R7, and R8 represent an alkyl group with the carbon number from 1 to 4.

According to a battery of the embodiment of the present invention, the electrolyte contains an electrolytic solution containing carboxylate ester or ketone, in which a third alkyl group is directly bonded to a carbonyl group. Therefore, even if the battery is stored in hot environment, decomposition reaction of the solvent in the cathode can be inhibited. Thereby, while decrease in capacity is inhibited, swollenness of the battery can be inhibited.

Other and further objects, features and advantages of the invention will appear more fully from the following description.

### BRIEF DESCRIPTION OF THE DRAWINGS

Fig. 1 is an exploded perspective view showing a secondary battery according to an embodiment of the invention; and
Fig. 2 is a cross section taken along line II-II of a winding electrode body shown in Fig. 1.

### DETAILED DESCRIPTION OF THE PREFERRED EMBODIMENTS

Embodiments of the present invention will be hereinafter described in detail with reference to the drawings.

### [First embodiment]

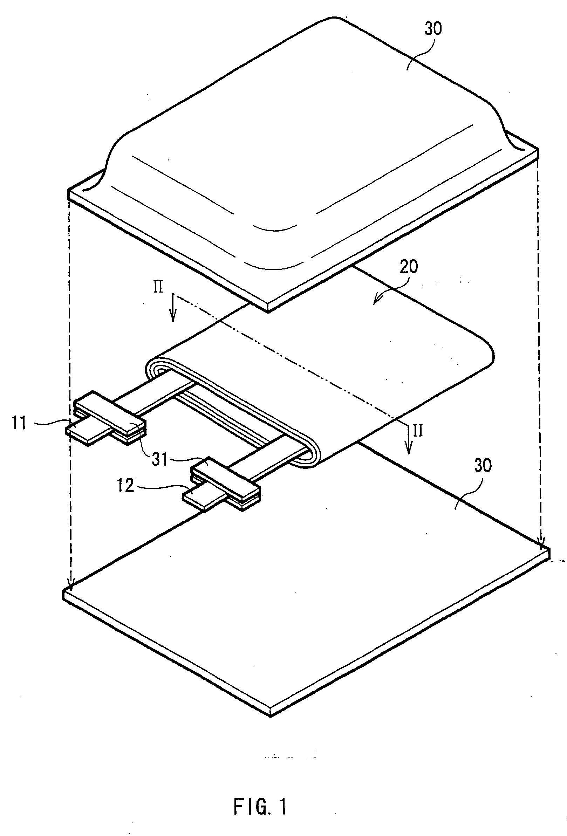

Fig. 1 shows an exploded view of a secondary battery according to a first embodiment of the present invention. The secondary battery includes a winding electrode body 20, on which a cathode terminal 11 and an anode terminal 12 are attached inside a film exterior member 30.

The cathode terminal 11 and the anode terminal 12 are directed from inside to outside of the exterior member 30, and, for example, are derived in the same direction, respectively. The cathode terminal 11 and the anode terminal 12 are respectively made of a metal material such as aluminum (Al), copper (Cu), nickel (Ni), and stainless and are respectively in a state of thin plate or mesh.

The exterior member 30 is made of a rectangular laminated film, in which, for example, a nylon film, an aluminum foil, and a polyethylene film are bonded together in this order. The exterior member 30 is, for example, arranged so that the polyethylene film side and the winding electrode body 20 are opposed, and the respective outer edge sections are contacted to each other by fusion bonding or an adhesive. Adhesive films 31 to protect from outside air intrusion are inserted between the exterior member 30 and the cathode terminal 11, the anode terminal 12. The adhesive film 31 is made of a material having contact characteristics to the cathode terminal 11 and the anode terminal 12. For example, when the cathode terminal 11 and the anode terminal 12 are made of the foregoing metal material, the adhesive film 31 is preferably made of a polyolefin resin such as polyethylene, polypropylene, modified polyethylene, and modified polypropylene.

The exterior member 30 may be made of a laminated film having other structure, a high molecular weight film such as polypropylene, or a metal film, instead of the foregoing laminated film.

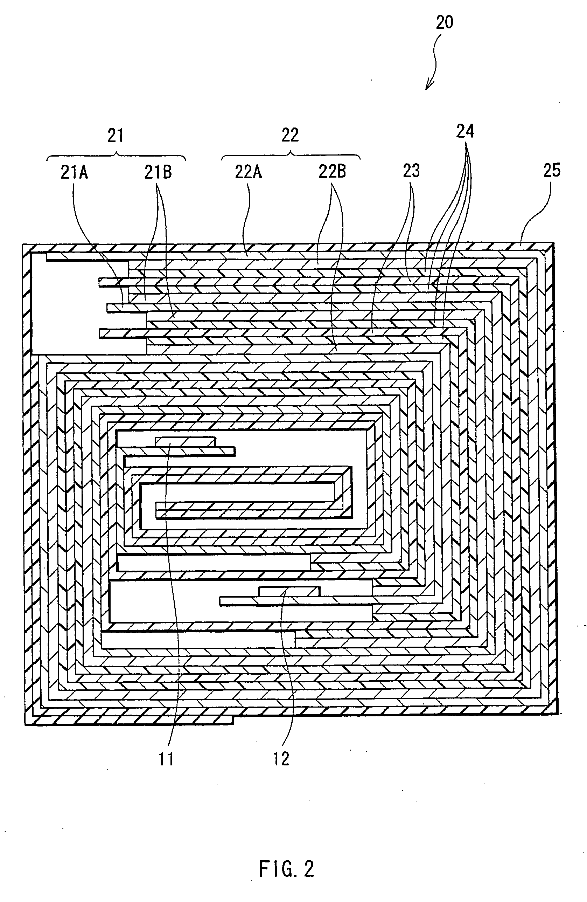

Fig. 2 is a view showing a cross section structure taken along line II-II of the winding electrode body 20 shown in Fig. 1. In the winding electrode body 20, a cathode 21 and an anode 22 are layered with a separator 23 and an electrolyte 24 inbetween and wound. The outermost periphery section thereof is protected by a protective tape 25.

The cathode 21 has, for example, a cathode current collector 21A having a pair of opposed faces and a cathode active material layer 21B provided on both faces or one face of the cathode current collector 21A. At one end of the cathode current collector 21A in the longitudinal direction, there is an exposed section on which no cathode active material layer 21B is provided. The cathode terminal 11 is attached on the exposed section. The cathode current collector 21A is made of, for example, a metal foil such as an aluminum foil, a nickel foil, and a stainless foil. The cathode active material layer 21B contains, for example, a cathode material capable of inserting and extracting lithium (Li) as a cathode active material.

As a cathode material capable of inserting and extracting lithium, in order to increase the energy density, a lithium-containing compound containing lithium, a transition metal element, and oxygen (O) is preferably contained. Specially, it is more preferable that as a transition metal element, at least one from the group consisting of cobalt (Co), nickel, and manganese (Mn) is contained. As such a lithium-containing compound, for example, a lithium cobalt complex oxide (LiCoO₂), a lithium nickel cobalt complex oxide (LiNiₓCo₁₋ₓO₂ (x is in the range of 0<x<1), or a lithium manganese complex oxide (LliMn₂O₄) having a spinel type structure can be cited. Further, a lithium phosphoric acid compound such as lithium iron phosphoric acid compound (LiFePO₄) is also preferable.

Further, the cathode active material layer 21B contains a conductive agent, and may further contain a binder if necessary. As a conductive agent, for example, carbon materials such as graphite, carbon black, and Ketjen black can be cited. One thereof is used singly, or two or more thereof are used by mixing. Further, in addition to the carbon materials, a metal material, a conductive high molecular weight material or the like may be used as long as the material has conductivity. As a binder, for example, synthetic rubbers such as styrene butadiene rubber, fluorinated rubber, and ethylene propylene diene rubber; or high molecular weight materials such as polyvinylidene fluoride can be cited. One thereof is used singly, or two or more thereof are used by mixing.

The anode 22 has, for example, an anode current collector 22A having a pair of opposed faces and an anode active material layer 22B provided on both faces or one face of the anode current collector 22A. The anode current collector 22A is made of a metal foil such as a copper foil , a nickel foil, and a stainless foil, which have good electrochemical stability, electrical conductivity, and mechanical strength. In particular, the copper foil is most preferable since the copper foil has high electrical conductivity.

The anode active material layer 22B contains one or more kinds of anode materials capable of inserting and extracting lithium as an anode active material. If necessary, the anode active material layer 22B may contain the binder, for example, similar to of the cathode active material layer 21B.

As an anode material capable of inserting and extracting lithium, for example, carbon materials, metal oxides, or high molecular weight compounds can be cited. As a carbon material, for example, graphitizable carbon, non-graphitizable carbon whose face distance of face (002) is 0.37 nm or more, or graphite whose face distance of face (002) is 0.340 nm or less can be cited. More specifically, pyrolytic carbons, cokes, graphites, glassy carbons, organic high molecular weight compound fired body, carbon fiber, activated carbon and the like can be cited. Of the foregoing, the cokes include pitch coke, needle coke, and petroleum coke. The organic high molecular weight compound fired body is a material, which is carbonized by firing a high molecular weight compound such as a phenol resin and a furan resin at appropriate temperatures. As a metal oxide, iron oxide, ruthenium oxide, molybdenum oxide and the like can be cited. As a high molecular weight compound, polyacetylene, polypyrrole and the like can be cited.

Further, as an anode material capable of inserting and extracting lithium, simple substances, alloys, or compounds of metal elements or metalloid elements capable of forming an alloy with lithium can be cited. Thereby, in the secondary battery, a high energy density can be obtained.

Examples of such metal elements or metalloid elements include, for example, tin (Sn), lead (Pb), aluminum, indium (In), silicon (Si), zinc (Zn), antimony (Sb), bismuth (Bi), cadmium (Cd), magnesium (Mg), Boron (B), gallium (Ga), germanium (Ge), arsenic (As), silver (Ag), zirconium (Zr), yttrium (Y), and hafnium (Hf). Examples of alloys or compounds thereof include, for example, alloys or compounds which are expressed by a chemical formula of Ma_{y}Mb_{z}. In the chemical formula, Ma represents at least one of metal elements and metalloid elements capable of forming an alloy with lithium, and Mb represents at least one of elements other than Ma. Values of y and z are y>0 and z≧0, respectively.

Specially, simple substances, alloys, or compounds of metal elements or metalloid elements in Group 14 in the long period periodic table are preferable. Simple substances, alloys or compounds of silicon or tin are particularly preferable. These materials have high capacity to insert and extract lithium, and can increase the energy density of the anode 22 compared to traditional graphite depending on combination to be used. These materials can be crystalline or amorphous.

Specific examples of such compounds include LiAl, AlSb, CuMgSb, SiB₄, SiB₆, Mg₂Si, Mg₂Sn, Ni₂Si, TiSi₂, MoSi₂, CoSi₂, NiSi₂, CaSi₂, CrSi₂, Cu₅Si, FeSi₂, MnSi₂, NbSi₂, TaSi₂, VSi₂, WSi₂, ZnSi₂, SiC, Si₃N₄, Si₂N₂O, SiOᵥ (0<v≦2), SnOw (0<w≦2), SnSiO₃, LiSiO, and LiSnO.

The anode active material layer 22B may be formed, for example, by coating. Otherwise, the anode active material layer 22B may be formed by at least one method from the group consisting of vapor-phase deposition method, liquid-phase deposition method, and firing method. The firing method is a method, in which a particulate anode active material is formed by being mixed with a binder, a solvent or the like according to needs, and then the resultant is provided with heat treatment at temperatures higher than the melting point of the binder or the like, for example. These methods are preferable, since destruction caused by swollenness and shrinkage of the anode active material layer 22B according to charge and discharge can be inhibited, the anode current collector 22A and the anode active material layer 22B can be integrated, and electron conductivity in the anode active material layer 22B can be improved. Further, these methods are preferable since a binder, voids and the like can be decreased or eliminated, and the anode 22 can be made a thin film.

In this case, the anode active material layer 22B is preferably alloyed with the anode current collector 22A at least in part of the interface with the anode current collector 22A. Specifically, it is preferable that on the interface, a component element of the anode current collector 22A is diffused in the anode active material layer 22B, or a component element of the anode active material is diffused in the anode current collector 22A, or the both component elements are diffused in each other. Alloying is often generated concurrently when the anode active material layer 22B is formed by vapor-phase deposition method, liquid-phase deposition method, or firing method. However, alloying may be generated when heat treatment is further provided.

The separator 23 is formed from, for example, a porous film made of a synthetic resin such as polytetrafluoro ethylene, polypropylene, and polyethylene, or a porous film made of ceramics. The separator 23 may have a structure, in which two or more kinds of the foregoing porous films are layered. Specially, the porous film made of polyolefin is preferable, since the porous film made of polyolefin has superior effects to prevent short, and contributes to improvement of safety of the battery by shutdown effects.

The electrolyte 24 is a so-called gelatinous electrolyte, in which an electrolytic solution is held in a holding body. The gelatinous electrolyte is preferable, since the high ion conductivity can be obtained, and leak can be prevented.

The electrolytic solution contains, for example, an electrolyte salt and a solvent to dissolve the electrolyte salt. As an electrolyte salt, lithium salts such as LiPF₆, LiBF₄, LiClO₄, LiAsF₆, and LiN(CF₃SO₂)₂, and lithium salts expressed as LiN(CₘF₂ₘ₊₁SO₂)(CₙF₂ₙ₊₁SO₂) such as LiN(C₂F₅SO₂)₂; lithium salts expressed as LiC(CₚF₂ₚ₊₁SO₂)(C_{q}F_{2q+1}SO₂)(CᵣF₂ᵣ₊₁SO₂) such as LiC(CF₃SO₂)₃; or lithium salts such as LiB(C₆H₅)₄, LiB(C₂O₄)₂, LiCF₃SO₃, LiCH₃SO₃, LiCl, and LiBr can be cited. One of the electrolyte salts can be used singly, or two or more thereof can be used by mixing. m, n, p, q, and r are integer numbers of 1 or more.

Specially, one of lithium salts such as LiPF₆, LiBF₄, LiClO₄, LiAsF₆, and lithium salts expressed as LiN(CₘF₂ₘ₊₁SO₂)(CₙF₂ₙ₊₁SO₂) and lithium salts expressed as LiC(CₚF₂ₚ₊₁SO₂)(C_{q}F_{2q+1}SO₂) (CᵣF₂ᵣ₊₁SO₂) is preferably used, or two or more thereof are preferably used by mixing, since battery characteristics such as storage characteristics can be improved, internal resistance can be decreased, and further higher conductivity can be obtained. It is more preferable to use a mixture of LiPF₆ and at least one from the group consisting of LiBF₄, LiClO₄, LiAsF₆, and lithium salts expressed as LiN(CₘF₂ₘ₊₁SO₂)(CₙF₂ₙ₊₁SO₂) and lithium salts expressed as LiC(CₚF₂ₚ₊₁SO₂)(C_{q}F_{2q+1}SO₂) (CᵣF₂ᵣ₊₁SO₂).

The solvent contains carboxylate ester expressed in Chemical formula 1 or ketone expressed in Chemical formula 2. As above, when the solvent contains carboxylate ester or ketone, in which a third alkyl group is directly bonded to a carbonyl group, decomposition reaction of the solvent in the cathode 21 can be inhibited even if the battery is stored in hot environment. Carboxylate ester or ketone may be used singly, or a plurality kinds thereof may be used by mixing. Further, carboxylate ester and ketone may be used by mixing.

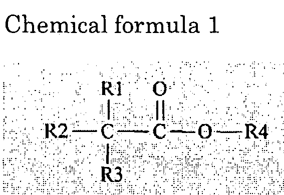

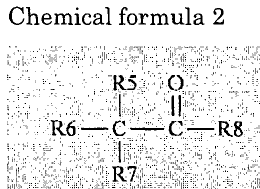

In Chemical formula 1, R1, R2, R3, and R4 are preferably an alkyl group with the carbon number from 1 to 4. Further, in Chemical formula 2, R5, R6, R7, and R8 are preferably an alkyl group with the carbon number from 1 to 4. When the carbon number of the alkyl group is large, the viscosity is increased and the capacity is decreased. R1, R2, R3, and R4, or R5, R6, R7, and R8 can be identical or different.

Specific examples of carboxylate ester expressed in Chemical formula 1 include (CH₃)₃CCOOCH₃, (CH₃)₃CCOOC₂H₅, (C₂H₅)₃CCOOCH₃, (CH₃)₂(C₃H₇)CCOOCH₃, (CH₃)(C₂H₅)(C₄H₉)CCOOC₂H₅, and (CH₃)₃CCOOC₄H₉. Further, specific examples of ketone expressed in Chemical formula 2 include (CH₃)₃CCOCH₃, (CH₃)₃CCOC₂H₅, (C₂H₅)₃CCOCH₃, (CH₃)₂(C₃H₇)CCOCH₃, (CH₃)(C₂H₅)(C₄H₉)CCOC₂H₅, and (CH₃)₃CCOC₄H₉.

The contents of the carboxylate ester expressed in Chemical formula 1 and the ketone expressed in Chemical formula 2 are preferably within the range from 5 wt% to 70 wt%. With this range, higher effects can be obtained.

In addition to the foregoing carboxylate ester or ketone, other nonaqueous solvent traditionally used may be mixed. As other nonaqueous solvent, for example, cyclic carbonate such as ethylene carbonate, propylene carbonate, butylene carbonate, and vinylene carbonate; chain carbonate such as dimethyl carbonate, diethyl carbonate, and ethyl methyl carbonate; other carboxylate ester such as methyl acetate, methyl propionate, and methyl butyrate; or ethers such as γ-butyrolactone, γ-valerolactone, sulfolane, tetrahydrofuran, 2-methyl tetrahydrofuran, and 1,2-dimethoxy ethane can be cited. Specially, ethylene carbonate, propylene carbonate, vinylene carbonate, γ-butyrolactone, or γ-valerolactone is preferable, since high ion conductivity can be thereby obtained. The foregoing nonaqueous solvent may be used singly, or several kinds thereof may be used by mixing.

Further, the solvent preferably contains a cyclic carbonate derivative obtained by substituting at least part of hydrogen of cyclic carbonate with halogen. Thereby, high ion conductivity can be obtained, and cycle characteristics can be improved. As such a cyclic carbonate derivative, for example, a derivative obtained by substituting at least part of hydrogen of ethylene carbonate or propylene carbonate with halogen can be cited. Specifically, 4-fluoro-1,3-dioxolane-2-on, 4-chrolo-1,3-dioxolane-2-on, 4-bromo-1,3-dioxolane-2-on, 4-trifluoromethyl-1,3-dioxolane-2-on and the like can be cited. Specially, 4-fluoro-1,3-dioxolane-2-on is preferable, since higher effects can be thereby obtained.

The holding body is composed of, for example, a high molecular weight compound. As a high molecular weight compound, for example, polyacrylonitrile, polyvinylidene fluoride, a copolymer of vinylidene fluoride and hexafluoropropylene, polytetrafluoro ethylene, polyhexafluoro propylene, polyethylene oxide or a cross-linked compound containing polyethylene oxide, a compound containing polypropylene oxide or polymethacrynitrile as a repeat unit, polyphosphazene, polysiloxane, polyvinyl acetate, polyvinyl alcohol, polymethacrylic methyl, polyacrylic acid, polymethacrylic acid, styrene-butadiene rubber, nitrile-butadiene rubber, polystyrene, or polycarbonate can be cited. Specially, in view of electrochemical stability, polyacrylonitrile, polyvinylidene fluoride, polyhexafluoro propylene, a copolymer of vinylidene fluoride and hexafluoropropylene, or a high molecular weight compound having a structure of polyethylene oxide is desirably used. An addition amount of the high molecular weight compound to the electrolytic solution varies according to compatibility between the electrolytic solution and the high molecular weight compound. However, in general, about 5 wt% to 50 wt% of the electrolytic solution is preferable.

The secondary battery can be manufactured as follows, for example.

First, for example, the cathode 21 is fabricated by forming the cathode active material layer 21B on the cathode current collector 21A. For example, the cathode active material layer 21B is formed as follows. Powders of the cathode active material, a conductive agent such as a carbon material, and a binder such as polyvinylidene fluoride are mixed to prepare a cathode mixture. The cathode mixture is dispersed in a dispersion medium such as N-methyl-2-pyrrolidone to obtain a cathode mixture slurry. After that, the cathode current collector 21A is coated with the cathode mixture slurry, which is dried and compression-molded to form the cathode active material layer 21B.

Further, for example, the anode 22 is fabricated by forming the anode active material layer 22B on the anode current collector 22A. For example, the anode active material layer 22B is formed as follows. Powders of the anode active material and a binder such as polyvinylidene fluoride are mixed to prepare an anode mixture. After that, the anode mixture is dispersed in a dispersion medium such as N-methyl-2-pyrrolidone to obtain an anode mixture slurry. The anode current collector 22A is coated with the anode mixture slurry, which is dried and compression-molded to form the anode active material layer 22B.

Further, for example, the anode active material layer 22B may be formed by depositing an anode active material on the anode current collector 22A by vapor-phase deposition method or liquid-phase deposition method. Further, the anode active material layer 22B may be formed by firing method, in which a precursor layer containing a particulate anode active material is formed on the anode current collector 22A, which is then fired. Otherwise, the anode active material layer 22B may be formed by combining two or more methods of vapor-phase deposition method, liquid-phase deposition method, and firing method. By forming the anode active material layer 22B by at least one method from the group consisting of vapor-phase deposition method, liquid-phase deposition method, and firing method, in some cases, in at least part of the interface with the anode current collector 22A, the anode active material layer 22B alloyed with the anode current collector 22A is formed.

In order to further alloy the interface between the anode current collector 22A and the anode active material layer 22B, it is possible to further perform heat treatment under the vacuum atmosphere or the non-oxidizing atmosphere. In particular, when the anode active material layer 22B is formed by the after-mentioned plating, the anode active material layer 22B may be hard to be alloyed with the anode current collector 22A even at the interface thereof. Therefore, in this case, it is preferable to perform heat treatment if necessary. Further, when the anode active material layer 22B is formed by vapor-phase deposition method, characteristics may be improved by further alloying the interface between the anode current collector 22A and the anode active material layer 22B. Therefore, in this case, it is also preferable to perform heat treatment if necessary.

As vapor-phase deposition method, for example, physical deposition method or chemical deposition method can be used. Specifically, vacuum deposition method, sputtering method, ion plating method, laser ablation method, thermal CVD (Chemical Vapor Deposition) method, plasma CVD method and the like can be utilized. As liquid-phase deposition method, known techniques such as electrolytic plating and electroless plating can be utilized. Regarding firing method, known techniques can be utilized. For example, atmosphere firing method, reactive firing method, or hot press firing method can be utilized.

Subsequently, for example, the cathode terminal 11 is attached on the cathode current collector 21A, and the electrolyte 24 in which an electrolytic solution is held in the holding body is formed on the cathode active material layer 21B, that is, on both faces or one face of the cathode 21. Further, the anode terminal 12 is attached on the anode current collector 22A, and the electrolyte 24 in which an electrolytic solution is held in the holding body is formed on the anode active material layer 22B, that is, on both faces or one face of the anode 22.

After the electrolyte 24 is formed, for example, the cathode 21 and the anode 22 on which the electrolyte 24 is formed are layered with the separator 23 inbetween. After that, the lamination is wound in the longitudinal direction and the protective tape 25 is adhered to the outermost periphery section thereof to form the winding electrode body 20.

After the winding electrode body 20 is formed, for example, the winding electrode body 20 is sandwiched between the exterior members 30, and outer edge sections of the exterior members 30 are contacted by thermal fusion-bonding or the like to enclose the winding electrode body 20. Then, the adhesive films 31 are inserted between the cathode terminal 11, the anode terminal 12, and the exterior member 30. Thereby, the secondary battery shown in Fig. 1 and Fig. 2 is completed.

Further, the foregoing secondary battery can be manufactured as follows. First, the cathode 21 and the anode 22 are fabricated as described above. The cathode terminal 11 and the anode terminal 12 are attached on the cathode 21 and the anode 22. After that, the cathode 21 and the anode 22 are layered with the separator 23 inbetween and wound. The protective tape 25 is adhered to the outermost periphery section thereof, and a winding body as the precursor of the winding electrode body 20 is formed. Next, the winding body is sandwiched between the exterior members 30, the outermost periphery sections except for one side are thermal fusion-bonded to obtain a pouched state, and the winding body is accommodated inside the exterior member 30. Subsequently, a composition of matter for electrolyte containing a solvent, an electrolyte salt, a polymerizable compound as the material for the high molecular weight compound, and if necessary, a polymerization initiator and other material such as a polymerization inhibitor is prepared, and injected into inside the exterior member 30.

Any polymerizable compound may be used as long as the polymerizable compound can form a high molecular weight compound capable of holding a solvent and the like by polymerization. As a polymerizable compound, for example, a polymerizable compound having an ether group and an ester group can be used. Such polymerizable compound preferably has a functional group capable of polymerization such as an acrylate group and a methacrylate group at the end thereof. One kind of the polymerizable compounds may be used singly, or two or more kinds thereof may be used by mixing.

After the composition of matter for electrolyte is injected, the opening of the exterior member 30 is thermal fusion-bonded and hermetically sealed in the vacuum atmosphere. Next, the resultant is heated according to need to polymerize the polymerizable compound to obtain a high molecular weight compound. Thereby, the gelatinous electrolyte 24 is formed, and the secondary battery shown in Fig. 1 and Fig. 2 is assembled.

The electrolyte 24 may be formed not by the method in which the composition of matter for electrolyte is injected after forming the winding body but, for example, by the method in which the composition of matter for electrolyte is applied on the cathode 21 and the anode 22 and then the resultant was wounded, enclosed in the exterior member 30, and further heated according to need. Alternatively, the electrolyte 24 may be formed by the method in which the composition of matter for electrolyte is applied on the cathode 21 and the anode 22, the resultant is heated according to need, thereby forming the electrolyte 24 and then wounded and enclosed in the exterior member 30. However, it is preferable to form the electrolyte 24 after being enclosed in the exterior member 30 because the interface bonding between the electrolyte 24 and the separator 23 can be fully improved and an increase in the internal resistance can be prevented.

In the secondary battery, when charged, for example, lithium ions are extracted from the cathode 21, and inserted in the anode 22 through the electrolyte 24. Meanwhile, when discharged, for example, lithium ions are extracted from the anode 22, and are inserted in the cathode 21 through the electrolyte 24. Then, since the electrolyte 24 contains carboxylate ester or ketone, in which the third alkyl group is directly bonded to a carbonyl group, decomposition reaction of the solvent in the cathode 21 is inhibited even if, for example, the battery is in hot environment. Therefore, decrease in capacity is inhibited, and generation of gas is inhibited.

As above, in this embodiment, the electrolyte 24 contains carboxylate ester expressed in Chemical formula 1 or ketone expressed in Chemical formula 2. Therefore, decomposition reaction of the solvent in the cathode 21 can be inhibited even when the battery is stored in hot environment. Therefore, while decrease in capacity is inhibited, swollenness of the battery can be inhibited.

### [Second embodiment]

A secondary battery according to a second embodiment of the present invention has the construction, the behavior, and the effects similar to of the first embodiment, except that as the holding body, a high molecular weight compound having the structure in which at least one kind selected from the group consisting of polyvinyl acetal and derivatives thereof is polymerized is used.

Polyvinyl acetal is a compound containing a constitutional unit containing an acetal group expressed in Chemical formula 3 (1), a constitutional unit containing a hydroxyl group expressed in Chemical formula 3 (2) and a constitutional unit containing an acetyl group expressed in Chemical formula 3 (3) as a repeat unit. Specifically, for example, polyvinyl formal whose R expressed in Chemical formula 3 (1) is hydrogen and polyvinyl butyral whose R expressed in Chemical formula 3 (1) is a propyl group are cited.

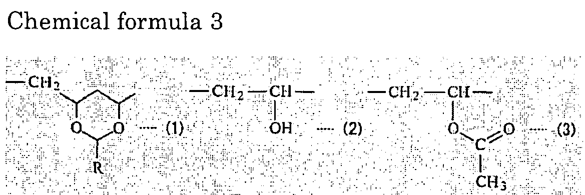

In the formula, R represents hydrogen atom or an alkyl group with the carbon number from 1 to 3.

The ratio of the acetal group in polyvinyl acetal is preferably within the range from 60 mol% to 80 mol%. With this range, solubility with solvent and stability of electrolyte can be improved. The weight-average molecular weight of polyvinyl acetal is preferably with in the range from 10,000 to 500,000. If the molecular weight is too low, polymerization reaction is hard to progress and if it is too high, the viscosity of the electrolyte is increased.

The high molecular weight compound may be a compound in which only polyvinyl acetal, only one kind of derivative thereof, or two or more kinds thereof is polymerized, or may be a copolymer of polyvinyl acetal and a monomer except the derivatives of polyvinyl acetal. Further, the high molecular weight compound may be a polymer polymerized by cross-linker.

As the holding body, a high molecular weight compound having a structure in which at least one kind selected from the group consisting of polyvinyl acetal and derivatives thereof is polymerized is used in the electrolyte 24. Therefore, the ratio of the electrolytic solution can be increased and the ion conductivity can be improved.

### [Third embodiment]

A secondary battery according to a third embodiment of the present invention has the construction, the behavior, and the effects similar to of the first embodiment, except that the electrolyte is a liquid electrolytic solution containing no holding body, and such electrolytic solution is impregnated in the separator 23. The construction of the electrolytic solution is similar to of the first embodiment.

The secondary battery can be manufactured as in the first embodiment, except that only electrolytic solution is injected instead of the composition of matter for electrolyte.

### [Examples]

Further, specific examples of the present invention will be described in detail.

### (Examples 1-1 to 1-6)

First, lithium carbonate (Li₂CO₃) and cobalt carbonate (CoCO₃) were mixed at a mole ratio of Li₂CO₃:CoCO₃=0.5:1. The mixture was fired for 5 hours at 900 deg C in the air to obtain lithium cobaltate (LiCoO₂) as the cathode active material. Next, 85 parts by mass of the obtained lithium cobaltate, 5 parts by mass of graphite as the conductive agent, and 10 parts by mass of polyvinylidene fluoride as the binder were mixed to prepare a cathode mixture. Subsequently, the cathode mixture was dispersed in N-methyl-2-pyrrolidone as the dispersion medium to obtain a cathode mixture slurry. After that, the cathode current collector 21A made of an aluminum foil being 20 µm thick was uniformly coated with the cathode mixture slurry and was dried. The resultant was compression-molded by a roll pressing machine to form the cathode active material layer 21B. Consequently, the cathode 21 was fabricated. After that, the cathode terminal 11 was attached on the cathode 21.

Further, pulverized graphite powders were prepared as an anode active material. 90 parts by mass of the graphite powders and 10 parts by mass of polyvinylidene fluoride as the binder were mixed to prepare an anode mixture. Further, the anode mixture was dispersed in N-methyl-2-pyrrolidone as the dispersion medium to obtain an anode mixture slurry. Next, both faces of the anode current collector 22A made of a copper foil being 15 µm thick were uniformly coated with the anode mixture slurry, which was dried. After that, the resultant was compression-molded by a roll pressing machine to form the anode active material layer 22B. Consequently, the anode 22 was fabricated. Subsequently, the anode terminal 12 was attached on the anode 22.

After the cathode 21 and the anode 22 were fabricated, the cathode 21 and the anode 22 were contacted with the separator 24 made of a micro-porous polyethylene film being 25 µm thick inbetween, wound in the longitudinal direction, and the protective tape 25 was adhered to the outermost periphery section thereof. Thereby, the winding body was fabricated.

Further, an electrolytic solution was formed by dissolving LiPF₆ as an electrolyte salt in a solvent in which ethylene carbonate and carboxylate ester expressed in Chemical formula 1 were mixed at a mass ratio of ethylene carbonate:carboxylate ester=3:7 so that LiPF₆ became 1 mol/l. Then, as carboxylate ester, (CH₃)₃CCOOCH₃ was used in Example 1-1, (CH₃)₃CCOOC₂H₅ was used in Example 1-2, (C₂H₅)₃CCOOCH₃ was used in Example 1-3, (CH₃)₂(C₃H₇) CCOOCH₃ was used in Example 1-4, (CH₃)(C₂H₅)(C₄H₉)CCOOC₂H₅ was used in Example 1-5, and (CH₃)₃CCOOC₄H₉ was used in Example 1-6.

95 parts by mass of the electrolytic solution and 5 parts by mass of a polymerizable compound solution were mixed to prepare a composition of matter for electrolyte. Then, as a polymerizable compound, a mixture obtained by mixing trimethylol propane triacrylate expressed in Chemical formula 4 and polyethylene glycol diacrylate expressed in Chemical formula 5 (n is 9 on average) at a mass ratio of trimethylol propane triacrylate:polyethylene glycol diacrylate=3:7 was used.

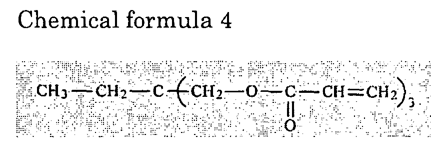

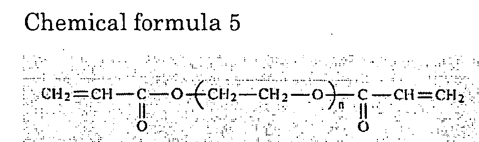

Next, the fabricated winding body was loaded between the exterior members 30, and three sides of the exterior members 30 were thermal fusion-bonded. For the exterior member 30, a dampproof aluminum laminated film, in which a nylon film being 25 µm thick, an aluminum foil being 40 µm thick, and a polypropylene film being 30 µm thick were sequentially layered from the outermost layer was used.

Subsequently, the composition of matter for electrolyte was injected inside the exterior members 30, the remaining one sides of the exterior members 30 were thermal fusion-bonded under the reduced pressure, and hermetically sealed. After that, the resultant was sandwiched between glass plates, heated for 30 minutes at 75 deg C to polymerize the polymerizable compound. Thereby, the composition of matter for electrolyte was gelated to obtain the electrolyte 24. Thereby, the secondary battery shown in Fig. 1 and Fig. 2 was obtained.

As Comparative examples 1-1 to 1-3 to Examples1-1 to 1-6, secondary batteries were fabricated as in Examples 1-1 to 1-6, except that dimethyl carbonate, ethyl methyl carbonate, or diethyl carbonate was used instead of carboxylate ester. Further, as Comparative example 1-4, a secondary battery was fabricated as in Examples 1-1 to 1-6, except that (CH₃)₃CCOOC₅H₉, carboxylate ester, in which an alkyl group with the carbon number 5 or more was bonded was used.

Regarding the fabricated secondary batteries of Examples 1-1 to 1-6 and Comparative examples 1-1 to 1-4, the capacity before stored at high temperatures, the swollen amount when stored at high temperatures, and the capacity retention ratio after stored at high temperatures were examined as follows.

First, constant current charge was performed until the battery voltage reached 4.2 V at a constant current of 880 mA at 23 deg C. After that, constant voltage charge was performed until the current value reached 1mA at a constant voltage of 4.2 V. Constant current discharge was performed until the battery voltage reached 3.0 V at a constant current of 880 mA. The discharge capacity then was the capacity before stored at high temperatures.

Next, under the conditions similar to of the foregoing conditions, charge at the second cycle was performed. After that, the batteries were stored for 20 days at 60 deg C. The variation of the thickness of the battery then was the swollen amount when stored at high temperatures.

Further, under the conditions similar to of the foregoing conditions, discharge at the second cycle was performed, and the discharge capacity then was obtained. The capacity retention ratio after stored at high temperatures was obtained as (discharge capacity after stored at high temperatures/discharge capacity before stored at high temperatures)×100 (%). The results thereof are shown in Table 1.

**Table 1 Electrolyte: Electrolytic solution + polymer of polymerizable compound**

| | Solvent | Capacity before stored at high temperatures (mAh) | Swollen amount when stored at high temperatures (mm) | Capacity retention ratio after stored at high temperatures (%) |
|---|---|---|---|---|
| Example 1-1 | EC+(CH₃)₃CCOOCH₃ | 854 | 0.2 | 92.7 |
| Example 1-2 | EC+(CH₃)₃CCOOC₂H₅ | 855 | 0.1 | 92.5 |
| Example 1-3 | EC+(C₂H₅)₃CCOOCH₃ | 847 | 0.1 | 92.6 |
| Example 1-4 | EC+(CH₃)₂(C₃H₇)CCOOCH₃ | 847 | 0.2 | 92.8 |
| Example 1-5 | EC+(CH₃)(C₂H₅)(C₄H₉)CCOO C₂H₅ | 848 | 0.1 | 90.4 |
| Example 1-6 | EC+(CH₃)₃CCOOC₄H₉ | 853 | 0.2 | 92.5 |
| Comparative example 1-1 | EC+dimethyl carbonate | 850 | 0.4 | 87.5 |
| Comparative example 1-2 | EC+ethyl methyl carbonate | 850 | 0.4 | 87.6 |
| Comparative example 1-3 | EC+diethyl carbonate | 847 | 0.3 | 86.8 |
| Comparative example 1-4 | EC+(CH₃)₃CCOOC₅H₉ | 785 | 0.1 | 90.8 |

| | | | | |
|---|---|---|---|---|
| EC: ethylene carbonate | | | | |

As evidenced by Table 1, according to Examples 1-1 to 1-6 using carboxylate ester expressed in Chemical formula 1, the swollen amount when stored at high temperatures was smaller and the capacity retention ratio after stored at high temperatures was higher than of Comparative examples 1-1 to 1-3 not using such carboxylate ester. Further, according to Examples 1-1 to 1-6 using carboxylate ester expressed in Chemical formula 1, the capacity before stored at high temperatures was higher than of Comparative example 1-4, in which R4 in carboxylate ester expressed in Chemical formula 1 was substituted with a pentyl group. Judging from the shape of the charge and discharge curve and degree of overcharge, it is thinkable that the capacity decrease in the battery of Comparative example 1-4 was caused by the fact that the load characteristics were significantly deteriorated due to increase in the viscosity of the solvent.

That is, it was found that when an electrolytic solution containing carboxylate ester expressed in Chemical formula 1 was contained in the electrolyte, swollenness could be inhibited, and high temperatures storage characteristics could be improved. Further, it was found that the carbon numbers of alkyl groups R1, R2, R3, and R4 to be bonded were preferably 4 or less.

### (Example 2-1)

A secondary battery was fabricated as in Example 1-1, except that the anode active material layer 22B made of silicon being 4 µm thick was formed by vapor deposition method on the anode current collector 22B made of an electrolytic copper foil, in which the arithmetic average roughness (Ra) was 0.5 µm and the thickness was 35 µm.

As Comparative example 2-1 to Example 2-1, a secondary battery was fabricated as in Example 2-1, except that dimethyl carbonate was used instead of carboxylate ester.

Regarding the secondary batteries of Example 2-1 and Comparative example 2-1, the capacity before stored at high temperatures, the swollen amount when stored at high temperatures, and the capacity retention ratio after stored at high temperatures were examined as in Example 1-1. The results thereof are shown together with the results of Example 1-1 and Comparative example 1-1 in Table 2.

**Table 2 Electrolyte: Electrolytic solution + polymer of polymerizable compound**

| | Anode active material | Solvent Solvent | Capacity before stored at high temperatur es (mAh) | Swollen amount when stored at high temperatures (mm) | Capacity retention ratio after stored at high temperatures (%) |
|---|---|---|---|---|---|
| Example 1-1 | Graphite | EC+(CH₃)₃CCOOC H₃ | 854 | 0.2 | 92.7 |
| Example 2-1 | Silicon | EC+(CH₃)₃CCOOC H₃ | 905 | 0.6 | 82.3 |
| Comparative example 1-1 | Graphite | EC+dimethyl carbonate | 850 | 0.4 | 87.5 |
| Comparative example 2-1 | Silicon | EC+dimethyl carbonate | 900 | 1.5 | 80.3 |

| | | | | | |
|---|---|---|---|---|---|
| EC: ethylene carbonate | | | | | |

As evidenced by Table 2, the results as in Example 1-1 were obtained. That is, it was found that when an electrolytic solution containing carboxylate ester expressed in Chemical formula 1 was contained in the electrolyte, swollenness could be inhibited and high temperatures storage characteristics could be improved even if other anode active material was used.

### (Examples 3-1 to 3-5)

Secondary batteries were fabricated as in Example 1-1, except that as an electrolyte salt, LiBF₄, LiClO₄, LiAsF₆, LiN(CF₃SO₂)₂, or LiC(CF₃SO₂)₃ was added to LiPF₆ by mixing. Then, the concentration of LiPF₆ was 0.8 mol/l, and the concentration of other electrolyte salt was 0.2 mol/l, respectively.

Regarding the secondary batteries of Examples 3-1 to 3-5, the capacity before stored at high temperatures, the swollen amount when stored at high temperatures, and the capacity retention ratio after stored at high temperatures were examined as in Example 1-1. The results thereof are shown together with the results of Example 1-1 in Table 3.

**Table 3 Electrolyte: Electrolytic solution + polymer of polymerizable compound**

| | Electrolyte salt | | Capacity | Swollen | Capacity |
|---|---|---|---|---|---|
| | Type | concentratio n (mol/l) | before stored at high temperatures (mAh) | amount when stored at high temperatures (mm) | retention ratio after stored at high temperatures (%) |
| Example 1-1 | LiPF₆ | 1.0 | 854 | 0.2 | 92.7 |
| Example 3-1 | LiPF₆ | 0.8 | 854 | 0.2 | 93.0 |
| | LiBF₄ | 0.2 | | | |
| Example 3-2 | LiPF₆ | 0.8 | 850 | 0.3 | 93.1 |
| | LiClO₄ | 0.2 | | | |
| Example 3-3 | LiPF₆ | 0.8 | 853 | 0.1 | 92.8 |
| | LiAsF₆ | 0.2 | | | |
| Example 3-4 | LiPF₆ | 0.8 | 858 | 0.3 | 93.4 |
| | LiN(CF₃SO₂)₂ | 0.2 | | | |
| Example 3-5 | LiPF₆ | 0.8 | 850 | 0.2 | 92.9 |
| | LiC(CF₃SO₂)₃ | 0.2 | | | |

As evidenced by Table 3, according to Examples 3-1 to 3-5 using other electrolyte salt in addition to LiPF₆, the capacity retention ratio after stored at high temperatures was improved than in Example 1-1 using only LiPF₆. That is, it was found that if LiPF₆ and other electrolyte salt were contained in the electrolytic solution, decrease in capacity could be further inhibited when the battery was stored in hot environment.

### (Example 4-1)

A secondary battery was fabricated as in Example 1-1, except that (CH₃)₃CCOCH₃, which was ketone expressed in Chemical formula 2 was used instead of carboxylic acid.

Regarding the secondary battery of Example 4-1, the capacity before stored at high temperatures, the swollen amount when stored at high temperatures, and the capacity retention ratio after stored at high temperatures were examined as in Example 1-1. The results thereof are shown together with the results of Example 1-1 and Comparative examples 1-1 to 1-3 in Table 4.

**Table 4 Electrolyte: Electrolytic solution + polymer of polymerizable compound**

| | Solvent | Capacity before stored at high temperatures (mAh) | Swollen amount when stored at high temperatures (mm) | Capacity retention ratio after stored at high temperatures (%) |
|---|---|---|---|---|
| Example 1-1 | EC+(CH₃)₃CCOOCH₃ | 854 | 0.2 | 92.7 |
| Example 4-1 | EC+(CH₃)₃CCOCH₃ | 852 | 0.2 | 89.6 |
| Comparative example 1-1 | EC+dimethyl carbonate | 850 | 0.4 | 87.5 |
| Comparative example 1-2 | EC+ethyl methyl carbonate | 850 | 0.4 | 87.6 |
| Comparative example 1-3 | EC+diethyl carbonate | 847 | 0.3 | 86.8 |

| | | | | |
|---|---|---|---|---|
| EC: ethylene carbonate | | | | |

As evidenced by Table 4, the results similar to of Example 1-1 were obtained. That is, it was found that when an electrolytic solution containing ketone expressed in Chemical formula 2 was contained in an electrolyte, swollenness could be similarly inhibited, and high temperatures storage characteristics could be similarly improved.

### (Example 5-1)

A secondary battery was fabricated as in Example 1-1, except that the electrolytic solution was used as it is without mixing a polymerizable compound.

As Comparative example 5-1 to Example 5-1, a secondary battery was fabricated as in Example 5-1, except that dimethyl carbonate was used instead of carboxylic acid. That is, in Comparative example 5-1, the electrolytic solution similar to of Comparative example 1-1 was used.

Regarding the secondary batteries of Example 5-1 and Comparative example 5-1, the capacity before stored at high temperatures, the swollen amount when stored at high temperatures, and the capacity retention ratio after stored at high temperatures were examined as in Example 1-1. The results thereof are shown together with the results of Example 1-1 and Comparative example 1-1 in Table 5.

**Table 5**

| | State of electrolyte | Solvent | Capacity before stored at high temperatures (mAh) | Swollen amount when stored at high temperatures (mm) | Capacity retention ratio after stored at high temperatures (%) |
|---|---|---|---|---|---|
| Example 1-1 | Gel | EC+(CH₃)₃CCOOCH₃ | 854 | 0.2 | 92.7 |
| Example 5-1 | Liquid | EC+(CH₃)₃CCOOCH₃ | 860 | 0.7 | 86.3 |
| Comparative example 1-1 | Gel | EC+dimethyl carbonate | 850 | 0.4 | 87.5 |
| Comparative example 5-1 | Liquid | EC+dimethyl carbonate | 860 | 1.6 | 85.4 |

| | | | | | |
|---|---|---|---|---|---|
| EC: ethylene carbonate | | | | | |

### Example 1-1, Comparative example 1-1: Electrolytic solution + polymer of polymerizable compound

As evidenced by Table 5, the results similar to of Example 1-1 were obtained. That is, it was found that if the electrolytic solution was used as it is without holding the electrolytic solution in the high molecular weight compound, swollenness could be inhibited and high temperatures storage characteristics could be improved as long as carboxylate ester expressed in Chemical formula 1 was contained.

### (Examples 6-1 to 6-3)

First, as in Examples 1-1 to 1-3, the cathode 21, the anode 22, and an electrolytic solution were fabricated. Then, the concentration of LiPF₆ in the electrolytic solution was 0.8 mol/kg.

Next, as a high molecular weight compound, a mixture obtained by mixing a copolymer of vinylidene fluoride and hexafluoro propylene having a molecular weight of 0.7 million by unit of weight-average molecular weight
(A) and a copolymer of vinylidene fluoride and hexafluoro propylene having a molecular weight of 0.31 million by unit of weight-average molecular weight
(B) at a mass ratio of (A):(B)=9:1 was prepared. The ratio of hexafluoro propylene in the copolymer was 7 wt%. Subsequently, the high molecular weight compound, an electrolytic solution, and dimethyl carbonate as the mixed solvent were mixed at a mass ratio of high molecular weight compound:electrolytic solution:dimethyl carbonate=1:4:8, dissolved by stirring at 70 deg C to prepare a sol precursor solution. The cathode 21 and the anode 22 were respectively coated with the obtained precursor solution by using a bar coater. After that, the mixed solvent was volatilized in a constant temperature bath at 70 deg C to form the gelatinous electrolyte 24.

After that, the cathode 21 and the anode 22 on which the electrolyte 24 was respectively formed were bonded with the separator 23 made of a porous polyethylene film being 10 µm thick inbetween. The lamination was flatly wound to form the winding electrode body 20.

The obtained winding electrode body 20 was enclosed under reduced pressure in the exterior member 30 made of a laminated film. Thereby, the secondary battery shown in Fig. 1 and Fig. 2 was fabricated.

As Comparative example 6-1 to Examples 6-1 to 6-3, a secondary battery was fabricated as in Examples 6-1 to 6-3, except that dimethyl carbonate was used instead of carboxylate ester. Then, the concentration of LiPF₆ as an electrolyte salt in the electrolytic solution was 0.8 mol/kg.

Regarding the secondary batteries of Examples 6-1 to 6-3 and Comparative example 6-1, the capacity before stored at high temperatures, the swollen amount when stored at high temperatures, and the capacity retention ratio after stored at high temperatures were examined as in Examples 1-1 to 1-3. The results thereof are shown together with the results of Examples 1-1 to 1-3 and Comparative example 1-1 in Table 6.

**Table 6**

| | Forming method of electrolyte | Solvent | Capacity before stored at high temperatures (mAh) | Swollen amount when stored at high temperatures (mm) | Capacity retention ratio after stored at high temperatures (%) |
|---|---|---|---|---|---|
| Example 1-1 | Polymerization | EC+(CH₃)₃CCOOCH₃ | 854 | 0.2 | 92.7 |
| Example 1-2 | | EC+(CH₃)₃CCOOC₂H₅ | 855 | 0.1 | 92.5 |
| Example 1-3 | | EC+(C₂H₅)₃CCOOCH₃ | 847 | 0.1 | 92.6 |
| Example 6-1 | Coating | EC+(CH₃)₃CCOOCH₃ | 850 | 0.2 | 85.2 |
| Example 6-2 | | EC+(CH₃)₃CCOOC₂H₅ | 850 | 0.3 | 83.2 |
| Example 6-3 | | EC+(C₂H₅)₃CCOOCH₃ | 849 | 0.2 | 84.8 |
| Comparative example 1-1 | Polymerization | EC+dimethyl carbonate | 850 | 0.4 | 87.5 |
| Comparative example 6-1 | Coating | EC+dimethyl carbonate | 850 | 0.5 | 82.5 |

| | | | | | |
|---|---|---|---|---|---|
| EC: ethylene carbonate | | | | | |

### Examples 1-1 to 1-3, Comparative example 1-1: polymer of polymerizable compound

### Examples 6-1 to 6-3, Comparative example 6-1: copolymer of vinylidene fluoride and hexafluoropropylene

As evidenced by Table 6, the results similar to of Examples 1-1 to 1-3 were obtained. That is, it was found that if the electrolyte 24 was formed by coating, swollenness could be inhibited and high temperatures storage characteristics could be improved as long as carboxylate ester expressed in Chemical formula 1 was contained.

### (Example 7-1)

A secondary battery was fabricated as in Example 6-1, except that (CH₃)₃CCOCH₃, which was ketone expressed in Chemical formula 2 was used instead of carboxylate ester. Then, the concentration of LiPF₆ as an electrolyte salt in the electrolytic solution was 1.0 mol/l.

Regarding the secondary battery of Example 7-1, the capacity before stored at high temperatures, the swollen amount when stored at high temperatures, and the capacity retention ratio after stored at high temperatures were examined as in Example 1-1. The results thereof are shown together with the results of Example 6-1 and Comparative example 6-1 in Table 7.

**Table 7 Electrolyte: Electrolytic solution + copolymer of vinylidene fluoride and hexafluoropropylene**

| | Solvent | Capacity before stored at high temperatures (mAh) | Swollen amount when stored at high temperatures (mm) | Capacity retention ratio after stored at high temperatures (%) |
|---|---|---|---|---|
| Example 6-1 | EC+(CH₃)₃CCOOCH₃ | 850 | 0.2 | 85.2 |
| Example 7-1 | EC+(CH₃)₃CCOCH₃ | 850 | 0.3 | 84.2 |
| Comparative example 6-1 | EC+dimethyl carbonate | 850 | 0.5 | 82.5 |

| | | | | |
|---|---|---|---|---|
| EC: ethylene carbonate | | | | |

As evidenced by Table 7, the results similar to of Examples 6-1 to 6-3 were obtained. That is, it was found that even if the electrolyte 24 was formed by coating, swollenness could be inhibited, and high temperatures storage characteristics could be improved as long as ketone expressed in Chemical formula 2 was contained.

### (Examples 8-1 to 8-3)

First, 94 parts by mass of lithium cobalt complex oxide (LiCoO₂) as the cathode active material, 3 parts by mass of graphite as the conductive agent, and 3 parts by mass of polyvinylidene fluoride as the binder were mixed and N-methyl-2-pyrrolidone as the dispersion medium was added to obtain a cathode mixture slurry. After that, the obtained cathode mixture slurry was uniformly applied on both faces of the cathode current collector 21A made of an aluminum foil being 20 µm thick, which was dried to form the cathode active material layer 21B. The area density of the cathode active material layer 21B was 40 mg/cm² per one face. Then, the cathode current collector 21A formed with the cathode active material layer 21B was cut in a shape of 50 mm in width and 300 mm in length to form the cathode 21.

97 parts by mass of graphite as the anode active material and 3 parts by mass of polyvinylidene fluoride as the binder were mixed and N-methyl-2-pyrrolidone as the dispersion medium was added to obtain an anode mixture slurry. After that, the obtained anode mixture slurry was uniformly applied on both faces of the anode current collector 22A made of an copper foil being 15 µm thick, which was dried to form the anode active material layer 22B. The area density of the anode active material layer 22B was 20 mg/cm² per one face. Then, the anode current collector 22A formed with the anode active material layer 22B was cut in a shape of 50 mm in width and 300 mm in length to form the anode 22.

After forming the cathode 21 and the anode22, the cathode lead 11 made of aluminum was attached on the cathode 21 and the anode lead 12 made of nickel was attached on the anode 22. Then the cathode 21 and the anode 22 were laminated with the separator 23 made of a microporous polyethylene film having a thickness of 20 µm inbetween and wounded to form the winding body.

After sandwiching the winding body between the exterior members 30 made of aluminum laminated film, the outermost periphery of the exterior members 30 except for one side were bonded to obtain a pouched state. At this time, the cathode lead 11 and the anode lead 12 were derived outside from the exterior member 30.

The composition of matter for electrolyte was injected inside the exterior member 30 from the open side thereof and the open side was adhered by thermal fusion bonding. The resultant was sandwiched between the glass plates to keep the shape of the battery constant and left for 24 hours to form the gelatinous electrolyte 24. Thereby, the secondary battery shown in Figs. 1 and 2 was fabricated.

The composition of matter for electrolyte was prepared by mixing and dissolving polyvinyl formal with an electrolytic solution at a mass ratio of polyvinyl formal:electrolytic solution = 1:99. As the electrolytic solution, a mixture obtained by mixing ethylene carbonate, propylene carbonate, diethyl carbonate, carboxylate ester expressed in Chemical formula 1 and ethyl methyl carbonate according to need as a solvent, and lithium hexafluorophospate as an electrolyte salt was used. At this time, as carboxylate ester, (CH₃)₃CCOOCH₃ was used in Examples 8-1 and 8-2, and (CH₃)₃CCOOC₂H₅ was used in Example 8-3. The mixture ratio (mass ratio) of the solvent and the electrolyte salt was ethylene carbonate:propylene carbonate:diethyl carbonate:carboxylate ester expressed in Chemical formula 1:lithium hexafluorophospate = 18:18:22:30:12 in Examples 8-1 and 8-3, and ethylene carbonate:propylene carbonate:diethyl carbonate:ethyl methyl carbonate:carboxylate ester expressed in Chemical formula 1:lithium hexafluorophospate = 18:18:26:21:5:12 in Example 8-2.

As Comparative example 8-1 to Examples 8-1 to 8-3, a secondary battery was fabricated as in Examples 8-1 to 8-3, except that carboxylate ester expressed in Chemical formula 1 was not used. At this time, as the electrolytic solution, a mixture obtained by mixing ethylene carbonate, propylene carbonate, diethyl carbonate, and ethyl methyl carbonate as a solvent, and lithium hexafluorophospate as an electrolyte salt at a mass ratio of ethylene carbonate:propylene carbonate:diethyl carbonate:ethyl methyl carbonate:lithium hexafluorophospate = 18:18:26:26:12 was used.

Further, part of the composition of matter for electrolyte and gelatinous electrolyte 24 were extracted, each were diluted by 300 times with N-methyl-2-pyrrolidone, and analyzed by GPC (Gel Permeation Chromatography) dedicated system (Shodex GPC-101 manufactured by Showa Denko K.K.). In the result, the weight-average molecular weight of the composition of matter for electrolyte and the gelatinous electrolyte 24 were 49,000 and 350,000, respectively. Consequently, it was confirmed that polyvinyl formal was polymerized.

Regarding the secondary batteries of Examples 8-1 to 8-3 and Comparative example 8-1, the swollen amount when stored at high temperatures, the capacity retention ratio after stored at high temperatures, and recovery rate of the capacity after stored at high temperatures were examined as follows.

First, charge was performed for three hours at 700 mA up to a ceiling of 4.2 V at 23 deg C. Then, after 10-minute halt, discharge was performed at 700 mA until reached 3.0 V. The discharge capacity then was the capacity before stored at high temperatures.

After performing charging under the same conditions, the batteries were stored for four hours at 90 deg C. The change in the thickness of the battery then was the swollen amount when stored at high temperatures.

After storing at 90 deg C, discharge was performed at 140 mA until reached 3.0 V at 23 deg C. The discharge capacity then was the capacity right after the storage. The capacity retention ratio after stored at high temperatures was obtained from (discharge capacity after stored at high temperatures/discharge capacity before stored at high temperatures)×100 (%).

Subsequently, charge was performed for three hours at 700 mA up to a ceiling of 4.2 V at 23 deg C. After 10-minute halt, discharge was performed at 700 mA until reached 3.0 V The discharge capacity then was the capacity after stored at high temperatures. The recovery rate of the capacity after stored at high temperatures was obtained from (discharge capacity after stored at high temperatures/discharge capacity before stored at high temperatures)×100 (%). The results are shown in Table 8.

**Table 8 Electrolyte: Electrolytic solution + copolymer of polyvinyl formal**

| | Solvent | Swollen amount when stored at high temperatures (mm) | Capacity retention ratio after stored at high temperatures (%) | Recovery rate (%) |
|---|---|---|---|---|
| Example 8-1 | EC+PC+DEC+(CH₃)₃CCOOCH₃(30) | 0.40 | 91.3 | 93.6 |
| Example 8-2 | EC+PC+DEC+EMC+(CH₃)₃CCOOCH₃(5) | 0.95 | 89.5 | 91.6 |
| Example 8-3 | EC+PC+DEC+(CH₃)₃CCOOC₂H₅(30) | 0.60 | 87.4 | 89.8 |
| Comparative example 8-1 | EC+PC+DEC+EMC | 1.00 | 86.6 | 87.2 |

| | | | | |
|---|---|---|---|---|
| EC: ethylene carbonate PC: propylene carbonate DEC: diethyl carbonate EMC: ethyl methyl carbonate | | | | |
| (The numeric value in parentheses represents the content (wt%) in electrolyte). | | | | |

As evidenced by Table 8, according to Examples 8-1 to 8-3 using carboxylate ester expressed in Chemical formula 1, the swollen amount when stored at high temperatures was smaller than of Comparative example 8-1 not using carboxylate ester expressed in Chemical formula 1, and the capacity retention ratio after stored at high temperatures and the recovery rate of the capacity were higher than of Comparative example 8-1.

That is, it was found that when other holding bodies were used, if the electrolytic solution containing carboxylate ester expressed in Chemical formula 1 was contained, swollenness could be inhibited, and high temperatures storage characteristics could be improved.

The present invention has been described with reference to the embodiments and the examples. However, the present invention is not limited to the embodiments and the examples, and various modifications may be made. For example, in the foregoing embodiments and examples, the case using lithium as an electrode reactant has been described. However, the present invention may be also applied to the case using other element of Group 1 in the long period periodic table such as sodium (Na) and potassium (K); an element of Group 2 in the long period periodic table such as magnesium and calcium (Ca); other light metal such as aluminum; or an alloy of lithium, the foregoing element of Group 1 or 2, or the foregoing light metal. In this case, similar effects could be obtained. Then, the anode material and the cathode material capable of inserting and extracting the electrode reactant, and the aqueous solvent and the like are selected according to the electrode reactant thereof.

Further, in the foregoing embodiments and examples, the case using the high molecular weight compound as a holding body has been described. However, it is possible to use an ion conductive inorganic compound or a mixture of a high molecular weight compound and an ion conductive inorganic compound as a holding body. As an ion conductive inorganic compound, for example, a compound containing polycrystal such as lithium nitride, lithium iodide, and lithium hydroxide; a mixture of lithium iodide and dichromium trioxide; a mixture of lithium iodide, lithium sulfide, and diphosphorous subsulfide or the like can be cited.

Further, in the foregoing embodiments and examples, descriptions have been given of the construction of the secondary battery with reference to one example. However, the present invention can be also applied to the battery having other construction. For example, in the foregoing embodiments and examples, the winding laminate type secondary battery has been described. However, the present invention can be similarly applied to a monolayer laminate type secondary battery or a multilayer laminate type secondary battery. Further, the present invention can be applied not only to the secondary battery, but also to a primary battery.

It should be understood by those skilled in the art that various modifications, combinations, sub-combinations and alternations may occur depending on design requirements and other factors insofar as they are within the scope of the appended claims or the equivalents thereof.

## Claims

1. A battery comprising:
a cathode;
an anode; and
an electrolyte inside a film exterior member,
wherein the electrolyte contains an electrolytic solution containing at least one from the group consisting of carboxylate ester expressed in Chemical formula 1 and ketone expressed in Chemical formula 2: 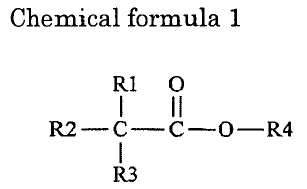
in which formula, R1, R2, R3, and R4 represent an alkyl group with the carbon number from 1 to 4, 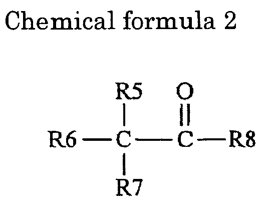
in which formula, R5, R6, R7, and R8 represent an alkyl group with the carbon number from 1 to 4.

2. A battery according to claim 1, wherein the contents of the carboxylate ester and ketone in the electrolytic solution are within the range from 5 wt% to 70 wt%.

3. A battery according to claim 1, wherein the electrolytic solution further contains other organic solvent.

4. A battery according to claim 3, wherein as the other organic solvent, at least one from the group consisting of ethylene carbonate, propylene carbonate, 4-fluoro-1,3-dioxolane-2-on, vinylene carbonate, γ-butyrolactone, and γ-valerolactone is contained.

5. A battery according to claim 1, wherein the electrolyte further contains a high molecular weight compound.

6. A battery according to claim 1, wherein the cathode contains a lithium-containing compound containing lithium (Li), at least one from the group consisting of cobalt (Co), nickel (Ni), and manganese (Mn), and oxygen (0).

7. A battery according to claim 1, wherein the anode contains a carbon material.

8. A battery according to claim 1, wherein the anode contains at least one from the group consisting of a simple substance, alloys, and compounds of silicon, and a simple substance, alloys, and compounds of tin.
